# EUROPÄISCHE PATENTSCHRIFT

(11) **EP 2 764 764 B1**
(45) Veröffentlichungstag und Bekanntmachung des Hinweises auf die Patenterteilung: **02.12.2015**
(21) Anmeldenummer: 14152145.0
(22) Anmeldetag: 22.01.2014
(51) Int. Cl.: A01B 79/00, A01D 41/127, A01D 75/28

(54) **Verfahren zur Einstellung von Arbeitsparametern einer Erntemaschine**
Method for setting the operating parameters of a harvesting machine
Procédé de réglage de paramètres de travail d'une machine de récolte

(30) Priorität: 07.02.2013 DE 102013201996
(43) Veröffentlichungstag der Anmeldung: 13.08.2014
(73) Patentinhaber: DEERE & COMPANY, Moline, Illinois 61265-8098 (US)
(72) Erfinder: Bischoff, Lutz, 66989 Nuenschweiler (DE)
(74) Vertreter: Holst, Sönke

(56) Entgegenhaltungen:
- WO-A1-2008/124596
- DE-A1-102011 007 511
- DE-C1- 4 431 824
- US-A- 5 995 895

## Beschreibung

Die Erfindung betrifft ein Verfahren zur Einstellung von Arbeitsparametern einer Erntemaschine, mit folgenden Schritten:
(a) Bereitstellen einer Karte mit Eigenschaften eines Feldes in einer elektronischen Kontrolleinrichtung der Erntemachine;
(b) Ableiten von wenigstens einem Arbeitsparameter der Erntemaschine bei einem Erntevorgang durch die Kontrolleinrichtung unter Berücksichtigung einer für eine Ernteposition aus der Karte entnommenen Eigenschaft des Feldes;
(c) Einstellen eines Aktors der Erntemaschine anhand des abgeleiteten Arbeitsparameters durch die Kontrolleinrichtung;
(d) Ermitteln eines feineingestellten Arbeitsparameters durch die Kontrolleinrichtung anhand des Ergebnisses des Schrittes (b) unter Berücksichtigung eines mit einem Sensor erfassten Messwertes eines durch den Aktor beeinflussbaren Ergebnisses des Erntevorgangs und/oder eines anhand einer Bedienereingabe ermittelten Zusammenhangs zwischen einem im Schritt (b) ermittelten Arbeitsparameter und einem einzustellenden Arbeitsparameter und Wiederholen des Schritts (c) mit dem feineingestellten Arbeitsparameter, sowie eine entsprechende Erntemaschine

### Stand der Technik

Landwirtschaftliche Erntemaschinen dienen zur Ernte von Pflanzen von einem Feld. In der Erntemaschine finden Verarbeitungsprozesse statt, um das Erntegut zwecks späterer Weiterverarbeitung zu behandeln. So wird das Erntegut in einem Feldhäcksler gehäckselt und in einem Mähdrescher gedroschen, getrennt und gereinigt. Bei diesen Verarbeitungsprozessen sind verschiedene Arbeitsparameter der Erntemaschine einzustellen, bei einem Feldhäcksler beispielsweise die Schnittlänge und ggf. eine Einwirkintensität einer Konditioniereinrichtung und bei einem Mähdrescher die Dreschtrommeldrehzahl, der Dreschspalt, die Drehzahl des Reinigungsgebläses und die Sieböffnung, und bei allen Erntemaschinen die Vortriebsgeschwindigkeit, welche den jeweiligen Durchsatz bestimmt.

Für die meisten Mähdrescher werden vom Hersteller auf Erfahrungswerten basierende Grundeinstellungen für die Arbeitsorgane wie Dreschwerk, Restkornabscheidung und Reinigungseinrichtung vorgeschlagen. Auf Grund der großen Variation von tatsächlichen Eigenschaften des Erntegutes können diese Vorschläge nur erste Näherungen sein. Der Bediener muss je nach den vorliegenden Vorgaben (z.B. Ernte mit geringen Verlusten oder in möglichst kurzer Zeit) und Erntegutbedingungen die Einstellungen noch optimieren, um die volle Leistungsfähigkeit der Maschine auslasten zu können. Das kann rein manuell nach eigener Strategie, im Dialogbetrieb mit Assistenzsystemen (vgl. EP 2 165 591 A1) oder automatisch mit einer Einstellautomatik (EP 2 401 904 A2) erfolgen. Ein grundsätzliches Problem bleibt, dass die Trenn-, Abscheide- und Reinigungsprozesse in einem Mähdrescher sehr komplex sind und ihre Ergebnisse nur von wenigen Sensoren überwacht werden können. Selbst mit sogenannten vorausschauenden Sensoren ist zunächst noch keine absolute Beziehung zu den Teilprozessen im Mähdrescher und deren Ergebnissen erkennbar. Aus diesem Grund wurden in der Vergangenheit verschiedene Methoden zur mathematischen Modellierung der Prozesse vorgeschlagen, auf deren Basis eine Einstellung der Funktionselemente erfolgen kann (Neurale Netzwerke, Fuzzy Controller, Regressions - Modelle usw.).

Alle diese Modelle müssen aber zunächst auch erst an die jeweiligen Erntebedingungen und Zielstellungen abgestimmt werden. Sie benötigen eine gewisse Trainingsphase. Außerdem müssen auch die in diesen Prozessen verwendeten Sensoren zunächst kalibriert werden, um ein zuverlässige Information liefern zu können. Ausgehend von den gefundenen Einstellungen in der Trainingsphase können diese Systeme dann Variationen in den Erntebedingungen in gewissen Umfang durch Anpassung der Maschineneinstellung und Fahrgeschwindigkeit kompensieren. Werden die Abweichungen zu groß müssen diese Systeme ebenfalls neu abgestimmt und die Sensoren neu kalibriert werden. Diese Trainingsphasen und Kalibrierung benötigen einen gewissen Zeitraum, über welchen möglichst konstante Randbedingungen herrschen sollten.

Weiterhin liegt der Nachteil vor, dass Rückkopplungssensoren mit Erntegut in der Erntemaschine zusammenwirken, weshalb bei Änderungen der Eigenschaften des aufgenommenen Ernteguts erst viel zu spät reagiert wird. Im Stand der Technik sind daher unterschiedliche Vorgehensweisen beschrieben worden, bei denen versucht wird, bei der Einstellung von Arbeitsparametern der Erntemaschine die Eigenschaften des jeweils zu erntenden Ernteguts vorausschauend durch eine selbsttätige Steuerung zu berücksichtigen.

Hierzu werden einerseits Sensoren verwendet, die vorausschauend von der Erntemaschine aus auf den Erntegutbestand blicken, um dessen Eigenschaften (z.B. Dichte, Reifezustand) vorausschauend zu ermitteln und anhand der ermittelten Eigenschaft Arbeitsparameter und Einstellungen der Erntemaschine zu verändern, wie beispielsweise die Vortriebsgeschwindigkeit (DE 101 30 665 A1).

Andererseits sind Verfahren beschrieben worden, bei denen zunächst eine elektronische Karte mit Feldeigenschaften und/oder Betriebsdaten der Erntemaschine erstellt wird, um die Kartendaten während der Ernte georeferenziert abzurufen und zur Erstellung von selbsttätig einzustellenden Arbeitsparametern der Erntemaschine zu verwenden:
Die DE 44 31 824 C1 schlägt beispielsweise vor, bei einem ersten Erntevorgang die Ertragsdaten für Korn- und Strohdurchsatz, Kornverluste sowie eingestellte Sollwerte von Betriebsparametern georeferenziert in einer Karte abzuspeichern. Beim nächsten Erntevorgang werden die Daten aus der Karte vorausschauend georeferenziert abgerufen, um die jeweiligen Arbeitsparameter der Erntemaschine daraus abzuleiten. Dabei besteht die Möglichkeit, eine untergeordnete Regelschleife einzufügen, welche auf einer so genannten Rückwärtsregelung für die Fahrgeschwindigkeit beruht, bei der die jeweiligen Durchsätze des Mähdreschers lokal erfasst und zur Bestimmung der Fahrgeschwindigkeit verwendet werden, um eine konstante Durchsatzleistung und/oder konstante Einstellungen der Arbeitsorgane des Mähdreschers zu erhalten.
Die US 5 995 895 A offenbart ein ähnliches Verfahren, gemäß dem Oberbegriff des Anspruchs 1.
Die DE 10 2005 000 770 B3 beschreibt eine Vorgehensweise zur selbsttätigen Ansteuerung eines Mähdreschers, bei der basierend auf während der Biomassenentwicklung gewonnenen, georeferenzierten Daten eine Sollkarte erstellt wird, die zur Steuerungsgrundlage des Mähdreschers dient. Beim Erntevorgang findet basierend auf der Sollkarte eine Regelung der Vortriebsgeschwindigkeit und der Einstellung der Arbeitsparameter des Mähdreschers statt, um eine akzeptable Druschqualität und Verluste zu erreichen.

### Aufgabe der Erfindung

Bei den vorausschauenden Sensoren erweist es sich als problematisch, hinreichend exakte Daten in einer ausreichend weit nach vorn greifenden Entfernung zu erfassen, um den Reaktionszeiten der Aktoren zwecks rechtzeitiger Veränderung der Arbeitsparameter der Erntemaschine Rechnung zu tragen. Geeignete Sensoren sind somit relativ aufwändig und kostspielig. Bei den bekannten, auf georeferenzierten Karten basierenden Systemen besteht das Problem, dass die tatsächlichen Ernteguteigenschaften nicht immer genau mit den aus der Karte prognostizierten Eigenschaften übereinstimmen, was zu unzweckmäßigen Arbeitsparametern der Erntemaschine führen kann. Die untergeordnete Regelschleife mit einer Rückwärtsregelung nach DE 44 31 824 C1 reduziert dieses Problem zwar, jedoch verbleiben immer noch Ungenauigkeiten in den nur aus der Karte abgeleiteten Daten, die eine lokale Optimierung von Arbeitsparametern der Erntemaschine und/oder eine Kalibrierung ihrer Rückkopplungssensoren, insbesondere von Verlustsensoren, sinnvoll erscheinen lassen, die im Stand der Technik jedoch nicht vorgesehen ist.

Die Aufgabe der vorliegenden Erfindung wird darin gesehen, ein Verfahren zur Einstellung von Arbeitsparametern einer Erntemaschine bereitzustellen, das die erwähnten Nachteile nicht oder in einem geringeren Maße aufweist.

### Lösung

Diese Aufgabe wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Ein Verfahren zur Einstellung von Arbeitsparametern einer Erntemaschine umfasst folgende Schritte:
(a) Bereitstellen einer Karte mit Eigenschaften eines Feldes in einer elektronischen Kontrolleinrichtung der Erntemachine;
(b) Ableiten von wenigstens einem Arbeitsparameter der Erntemaschine bei einem Erntevorgang durch die Kontrolleinrichtung unter Berücksichtigung einer für eine Ernteposition aus der Karte entnommenen Eigenschaft des Feldes;
(c) Einstellen eines Aktors der Erntemaschine anhand des abgeleiteten Arbeitsparameters durch die Kontrolleinrichtung;
(d) Ermitteln eines feineingestellten Arbeitsparameters durch die Kontrolleinrichtung anhand des Ergebnisses des Schrittes (b) unter Berücksichtigung eines mit einem Sensor erfassten Messwertes eines durch den Aktor beeinflussbaren Ergebnisses des Erntevorgangs und/oder eines anhand einer Bedienereingabe ermittelten Zusammenhangs zwischen einem im Schritt (b) ermittelten Arbeitsparameter und einem einzustellenden Arbeitsparameter und Wiederholen des Schritts (c) mit dem feineingestellten Arbeitsparameter.

Es wird vorgeschlagen, dass (e) durch die Kontrolleinrichtung anhand der Karte Strecken entlang eines Weges der Erntemaschine über das Feld identifiziert werden, an denen Eigenschaften des Feldes innerhalb vorbestimmter Grenzen und über einen Schwellenwert für die Länge liegende Distanzen homogen sind, und dass (f) Kalibrierdaten für den Sensor und/oder Parameter für die Feineinstellung des Arbeitsparameters und/oder die Bedienereingabe für den Schritt (d) beim Befahren und Abernten zumindest einiger der im Schritt (e) identifizierten Strecken ermittelt und bei nachfolgenden Schritten (d) verwendet werden.

Mit anderen Worten wird eine elektronischen Karte erstellt, in welcher Eigenschaften eines Feldes georeferenziert aufgezeichnet sind. Bei diesen Eigenschaften kann es sich um Bodeneigenschaften (Bodenart, Bodenfeuchtigkeit), topographische Eigenschaften (Höhe über Normalnull, Neigungswinkel und Ausrichtung) und/oder um Informationen handeln, aus denen sich die Bestandsdichte des Feldes ableiten lässt, wie beispielsweise Daten hinsichtlich des Pflanzen- und/oder Nutzanteildurchsatzes aus vorherigen Erntevorgängen oder Daten zur ortsspezifischen Düngerausbringung unter Gesichtspunkten der Präzisionslandwirtschaft. Hierzu sei auf den Stand der Technik nach DE 44 31 824 C1 und DE 10 2005 000 770 B3 verwiesen.

Diese Karte kann auf einem stationären Computer in einem Büro oder auf einem mobilen Rechner oder in der elektronischen Kontrolleinrichtung der Erntemaschine erstellt werden und wird im Schritt (a) in den Arbeitsspeicher der Kontrolleinrichtung der Erntemaschine geladen.

Im Schritt (b) wird während eines Erntevorgangs durch die Kontrolleinrichtung unter Berücksichtigung einer für eine Ernteposition aus der Karte entnommenen Eigenschaft des Feldes wenigstens ein Arbeitsparameter der Erntemaschine abgeleitet. Es wird somit beim Erntevorgang die Position der Erntemaschine festgestellt, wozu auf ein bekanntes satellitenbasiertes oder auf erdgebundene Sender zurückgreifendes Positionsbestimmungssystem, wie GPS, Galileo, Glonass und/oder ein Trägheitsnavigationssystem zurückgegriffen werden kann. Für jede zu bearbeitende Position des Feldes wird (vorzugsweise vorausschauend, damit beim Erreichen einer bestimmten Position der Arbeitsparameter schon entsprechend eingestellt ist) eine Eigenschaft des Feldes aus der Karte ausgelesen und daraus eine zweckmäßige Einstellung eines Arbeitsparameters der Erntemaschine abgeleitet. Im Schritt (c) wird dieser Arbeitsparameter dann durch die Kontrolleinrichtung eingestellt, wozu ein geeignetes Steuersignal an einen Aktor der Erntemaschine gegeben wird.

Da die Karte nicht in allen Fällen die Realität hinreichend exakt widerspiegelt, wird im Schritt (d) eine Feineinstellung des im Schritt (b) ermittelten Arbeitsparameters durchgeführt. Dabei kann durch die Kontrolleinrichtung eine Regelung des Arbeitsparameters durchgeführt werden, die als Rückkopplungswert auf einen mit einem Sensor erfassten Messwert eines durch den Aktor beeinflussbaren Ergebnisses des Erntevorgangs zurückgreift. Alternativ oder zusätzlich kann die Kontrolleinrichtung im Schritt (d) die Feineinstellung anhand eines basierend auf eine Bedienereingabe ermittelten Zusammenhangs zwischen einem im Schritt (b) ermittelten Arbeitsparameter und einem einzustellenden Arbeitsparameter vornehmen. Es wird somit eine Bedienereingabe berücksichtigt, aus der eine (absolute oder relative) Veränderung des im Schritt (b) ermittelten Arbeitsparameters abgeleitet wird. Die Bedienereingabe kann beispielsweise besagen, dass die Vortriebsgeschwindigkeit oder ein beliebiger anderer Arbeitsparameter um einen bestimmten Prozentsatz höher sein soll als im Schritt (b) ermittelt. Der Schritt (c) wird mit dem nun feineingestellten (anhand des Rückkopplungswerts des Sensors oder der Bedienereingabe geregelten) Arbeitsparameter wiederholt. Zukünftige, nur auf den Werten aus der Karte basierende Durchläufe des Schritts (c) entfallen, sobald hinreichende Daten für den Schritt (d) vorliegen. Die Aktoren werden dann nur noch basierend auf dem Ergebnis des Schritts (d) eingestellt.

Wenn somit der Aktor beispielsweise die Vortriebsgeschwindigkeit kontrolliert und der Sensor den Durchsatz in der Erntemaschine erfasst, z.B. durch Messung einer Antriebskraft eines Einzugsförderers oder einer Dreschtrommel, wird ein im Schritt (b) bei der Bestimmung der Vortriebsgeschwindigkeit als zu erreichender Sollwert ermittelter, erwarteter Durchsatz mit dem tatsächlichen Durchsatz verglichen und die Vortriebsgeschwindigkeit im Falle einer Abweichung ausgleichend angehoben oder abgesenkt, um einen gewünschten Sollwert des Durchsatzes zu erhalten. Analog wird die Vortriebsgeschwindigkeit um den erwähnten Prozentsatz erhöht, wenn die Bedienereingabe berücksichtigt wird. In diesem Fall muss nicht auf Sensoren zurückgegriffen werden, sondern man erhält eine offene Regelschleife, deren Sollwert durch die Bedienereingabe korrigiert wird.

Da jedoch auch die Sensoren nicht in allen Fällen hinreichend genau arbeiten und landwirtschaftliche Erntemaschinen, insbesondere Mähdrescher, komplexe Systeme darstellen, die relativ empfindlich auf die Erntegutbedingungen reagieren, schlägt die vorliegende Erfindung vor, dass die Kontrolleinrichtung in einem Schritt (e) anhand der Karte Strecken entlang eines Weges der Erntemaschine über das Feld identifiziert, an denen Eigenschaften des Feldes innerhalb vorbestimmter Grenzen und über einen Schwellenwert für die Länge liegende Distanzen homogen sind. Es werden demnach hinreichend lange Teilstrecken eines zu überfahrenden Wegs der Erntemaschine über das Feld identifiziert, auf denen eine oder mehrere Eigenschaften hinreichend ähnlich oder gleich sind. Diese Teilstrecken eignen sich demnach besonders gut dazu, in einem Schritt (f) Kalibrierdaten für den Sensor und/oder Parameter für die Feineinstellung des Arbeitsparameters und/oder die erwähnte Bedienereingabe zu ermitteln. Diese Kalibrierdaten und/oder Parameter und/oder Bedienereingabe wird bzw. werden beim Befahren und Abernten zumindest einiger der im Schritt (e) identifizierten Strecken ermittelt und bei nachfolgenden Schritten (d) verwendet.

Ein Vorteil der Nutzung von georeferenzierten Karten ist die Möglichkeit, die zusammenhängende Größe von Bereichen mit nahezu ähnlichen Eigenschaften, sowie die Grenzen dieser Bereiche vorab abzuschätzen. Das ermöglicht, die Dynamik und Stabilität von Regelkreisen deutlich zu verbessern. So können zusammenhängende größere Bereiche genutzt werden, um Sensoren zu kalibrieren, die Regelmodelle auf die realen Bedingungen abzustimmen, oder eine Einstellungsoptimierung für diesen Bereich vorzunehmen. Bei kleineren Bereichen kann je nach Regelaufgabe entschieden werden, ob dieser Bereich ignoriert (gefiltert) werden soll oder ob sogar eine aggressivere Regelung erfolgen muss. In ähnlicher Weise kann vorab abgeschätzt werden, ob die Übergänge zwischen verschiedenen Bereichen mehr fließend oder schärfer sind, so dass dort ebenfalls die Dynamik der Regelung entsprechend angepasst werden kann.

Es ist nicht das vorrangige Ziel der Erfindung, aus den Kartendaten sofort direkte Hinweise zur optimalen Einstellung der Maschine abzuleiten. Vielmehr sollen die Bereiche mit gleichen, bzw. ähnlichen Eigenschaften und deren Grenzen erkannt werden. Für die jeweiligen Bereiche erfolgt zunächst eine Optimierung durch einen inneren Regelkreis. Diese gefundenen Werte können dann genutzt werden, um die Karte in bekannter Weise zu "trainieren". Ein weiterer Vorteil ist, dass eine lernfähige georeferenzierte Karte als Rahmen für verschiedene Regelaufgaben aufgebaut werden kann, wodurch sich der Entwicklungsaufwand reduziert.

Auf diese Weise wird die Karte nicht nur zur (vorausschauenden) Einstellung des Arbeitsparameters der Erntemaschine verwendet, sondern dient auch dazu, Strecken des Ernteweges zu identifizieren, auf denen Kalibrierdaten für den Sensor und/oder Parameter für die Feineinstellung des Arbeitsparameters und/oder die Bedienereingabe ermittelt werden, die anschließend zur selbsttätigen, genaueren Feineinstellung des Arbeitsparameters genutzt werden.

Im Schritt (f) können die Kalibrierdaten und/oder Parameter für die Feineinstellung des Arbeitsparameters für den Schritt (d) durch einen Bediener ermittelt und in die Kontrolleinrichtung eingegeben oder selbsttätig durch die Kontrolleinrichtung ermittelt werden.

Bei dem Arbeitsparameter kann es sich beispielsweise um die Vortriebsgeschwindigkeit der Erntemaschine, eine Dreschwerkeinstellung (Drehzahl, Dreschspalt), eine Reinigungseinstellung (Gebläsedrehzahl, Sieböffnung, Siebschwingfrequenz) und/oder eine Schneidwerkeinstellung (Höhe, Seitenneigung) handeln.

Der Sensor kann beispielsweise ein Kornverlustsensor und/oder ein Durchsatzsensor sein.

Wie oben beschrieben, können im Schritt (d) Unterschiede zwischen einem Sollwert für einen im Schritt (b) nur aus der Karte abgeleiteten Arbeitsparameter und einem mittels eines Sensors ermittelten Messwert bestehen, die zur Nachregelung des Arbeitsparameters führen. Diese Unterschiede können auch zur Aktualisierung der in der Karte verzeichneten Eigenschaften und/oder der zugehörigen Position verwendet werden.

Die im Schritt (f) ermittelten Parameter für die Feineinstellung des Arbeitsparameters können Größen von mathematischen Modellen oder von Maschinenlernalgorithmen sein und/oder die Auswahl einer Kontrollstrategie betreffen.

Es bietet sich an, dass die Kontrolleinrichtung im Schritt (d) zusätzlich den Messwert eines vorausschauenden Erntegutsensors berücksichtigt, z.B. einer Kamera, eines Radarsensors oder eines Laserscanners.

Um unnötige Verstellungen des Aktors zu vermeiden, kann die Kontrolleinrichtung im Schritt (b) Änderungen der Eigenschaften des Feldes in der Karte ignorieren, wenn diese nur für über einen Mindestwert unterschreitende Distanzen gelten.

### Ausführungsbeispiel

In den Zeichnungen ist ein nachfolgend näher beschriebene Ausführungsbeispiel der Erfindung dargestellt. Es zeigt:
- Fig. 1: eine schematische seitliche Ansicht einer landwirtschaftlichen Erntemaschine in Form eines Mähdreschers,
- Fig. 2: ein Flussdiagramm, nach dem eine Kontrolleinrichtung der Erntemaschine der Figur 1 arbeitet, und
- Fig. 3: ein Beispiel für eine Karte, die von der Kontrolleinrichtung der Erntemaschine verwendet wird.

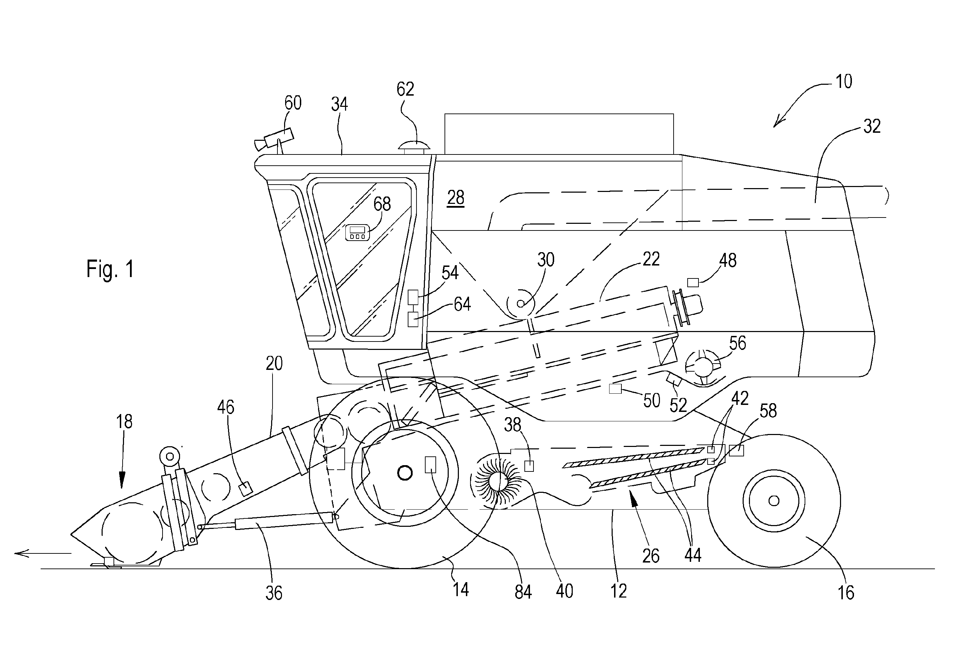

Die Figur 1 zeigt eine selbstfahrende Erntemaschine in Form eines Mähdreschers 10 mit einem Fahrgestell 12, das sich über angetriebene vordere Räder 14 und lenkbare rückwärtige Räder 16 auf dem Boden abstützt und von diesen fortbewegt wird. Die Räder 14, 16 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb, die in der Figur 1 nach links verläuft.

An den vorderen Endbereich des Mähdreschers 10 ist ein Erntevorsatz 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägfördererzusammenbau 20 einem Axialdreschwerk 22 zuzuführen. Das im Axialdreschwerk 22 durch Dreschkörbe und Roste hindurchtretende, Körner und Verunreinigungen enthaltende Gemisch gelangt in eine Reinigungseinrichtung 26. Durch die Reinigungseinrichtung 26 gereinigtes Getreide wird mittels einer Körnerschnecke einem Körnerelevator zugeführt, der es in einen Korntank 28 befördert. Das gereinigte Getreide aus dem Korntank 28 kann durch ein Entladesystem mit einer Querschnecke 30 und einem Entladeförderer 32 entladen werden. Die genannten Systeme werden mittels eines Verbrennungsmotors angetrieben und von einem Bediener aus einer Fahrerkabine 34 heraus kontrolliert und gesteuert.

Eine Kontrolleinrichtung 54 kontrolliert (über nicht gezeigte Ventile) die Position eines Aktors 36 zur Veränderung der Höhe des Erntevorsatzes 18 über dem Boden, die Position eines Aktors 38 zur Verstellung der Drehzahl eines Gebläses 40 der Reinigungseinrichtung 26, von zwei Aktoren 42 zur Verstellung der Öffnungsweite von Sieben 44 der Reinigungseinrichtung 26 und eines Aktors 84 zur Vorgabe der Vortriebsgeschwindigkeit des Mähdreschers 10. Ein weiterer von der Kontrolleinrichtung 54 kontrollierter Aktor (nicht gezeigt) könnte die Höhe einer Haspel des Erntevorsatzes 18 vorgeben. Weiterhin kontrolliert ein Aktor 48 die Drehzahl des Axialdreschwerks 22 und ein Aktor 50 verstellt die Position des Dreschkorbs, um die Größe des Dreschspalts einzustellen. Die erwähnten Aktoren 36, 38, 42, 84, 48, 50 werden durch die Kontrolleinrichtung 54 verstellt.

Ein Durchsatzsensor 46 erfasst den Durchsatz im Schrägfördererzusammenbau 20, beispielsweise anhand eines Antriebsmoments eines Kettenförderers des Schrägförderers. Ein erster Kornverlustsensor 52 erfasst die Menge der Verlustkörner im vom Axialdreschwerk 22 abgegebenen Erntegutrestestrom, der durch eine Auswurftrommel 56 direkt oder über einen Strohhäcksler (nicht gezeigt) an der Rückseite des Mähdreschers 10 auf das Feld abgegeben wird. Ein zweiter Kornverlustsensor 58 erfasst die Menge der Verlustkörner im von Obersieb der Reinigungseinrichtung 26 abgegebenen Erntegutrestestrom, der durch den erwähnten Strohhäcksler oder einen separaten Kaffverteiler auf das Feld abgegeben wird. Die Sensoren 46, 52 und 58 sind signalübertragend mit der Kontrolleinrichtung 54 verbunden.

Die Kontrolleinrichtung 54 ist weiterhin mit einer Speichereinrichtung 64, einer Positionsbestimmungseinrichtung 62 in Form einer Antenne zum Empfang von Signalen eines satellitenbasierten Positionsbestimmungssystems und mit einer Bedienerschnittstelle 68 mit Eingabemitteln (Tasten) und einer Anzeige verbunden.

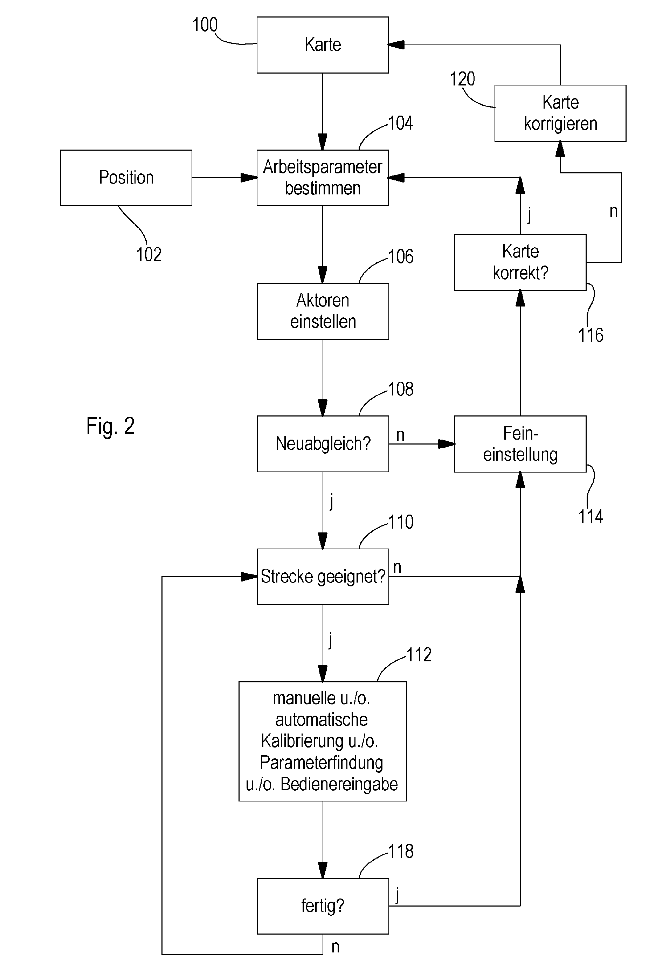

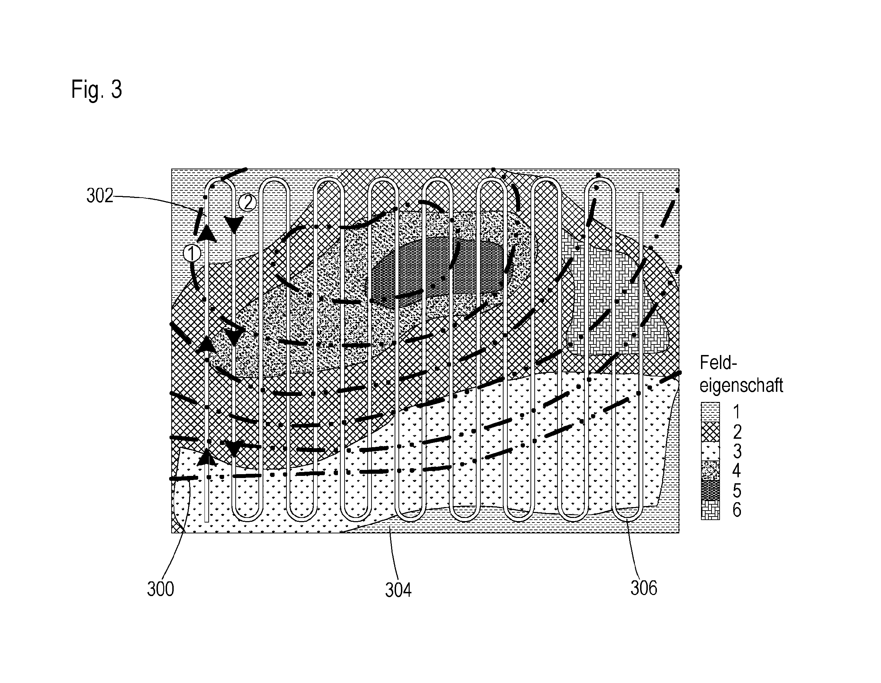

Die Figur 2 zeigt ein Flussdiagramm, nach dem die Kontrolleinrichtung 54 des Mähdreschers 10 beim Abernten eines Feldes vorgeht. Im Schritt 100 wird eine Karte für das jeweilige Feld in die Speichereinrichtung 64 geladen. In dieser Karte sind georeferenzierte Daten für Eigenschaften des Feldes abgespeichert. Ein Beispiel einer derartigen Karte ist in der Figur 3 dargestellt. Sie enthält positionsreferenzierte Eigenschaften des Feldes 304, bei denen es sich beispielsweise um die Bodenart und/oder den bei der letzten Ernte gemessenen Ertrag handelt. Diese Eigenschaften sind in der dargestellten Karte in insgesamt 6 Klassen eingeteilt. Außerdem enthält die Karte topographische Daten des Feldes 304 (Höhendaten oder Höhenlinien 300). Diese Karte kann bei letzten Ernte durch den Mähdrescher 10 anhand von Daten des Durchsatzsensors 46 und (dreidimensionalen) Positionsdaten von der Positionsbestimmungseinrichtung 62 selbst erzeugt worden und seither in der Speichereinrichtung 64 verblieben sein oder sie wurde auf beliebige Weise (z.B. von einem anderen Mähdrescher oder anhand von Luftbildern oder durch ein Erkundungsfahrzeug oder -fluggerät oder anhand von Daten für die präzisionslandwirtschaftliche Bewirtschaftung des Feldes) von einem externen Rechner drahtlos (über eine Funkverbindung) oder eine Speicherkarte in die Speichereinrichtung 64 übertragen. Zusätzlich ist in der Speichereinrichtung 64 ein geplanter Weg 302 abgespeichert, den der Mähdrescher 10 bei der Ernte auf dem Feld 304 zurücklegen wird. Hierzu kann auf an sich bekannte Vorgehensweisen der Wegplanung verwiesen werden.

Im Schritt 104 bestimmt die Kontrolleinrichtung 54 die aktuelle Position des Mähdreschers 10 anhand des Signals der Positionsbestimmungseinrichtung (Schritt 102) und leitet daraus eine Position ab, welche der Mähdrescher 10 in einer vorbestimmten Zeit (z.B. in 2s) erreichen wird. Diese vorausschauende Arbeitsweise ist wegen der Reaktionszeiten der Aktoren 36, 38, 42, 84, 48, 50 vorteilhaft. Anhand der ermittelten Position entnimmt die Kontrolleinrichtung 54 die zugehörige Eigenschaft des Feldes 304 aus der Karte und leitet daraus geeignete Arbeitsparameter des Mähdreschers 10 und daraus abgeleitete Einstellwerte für die Aktoren 36, 38, 42, 84, 48, 50 ab. Beispielsweise kann anhand einer in der Karte abgespeicherten Erntegutdichte ein zu erwartender Durchsatz als Arbeitsparameter berechnet und daraus die Vortriebsgeschwindigkeit des Mähdreschers 10 zwecks Ansteuerung des Aktors 84 abgeleitet werden. Auf analoge Weise können die Einstellungen der übrigen Aktoren 38, 42, 84, 48, 50 bestimmt werden. Die Schritte 100 und 102 zur georeferenzierten Bereitstellung der Daten aus der Karte (und ggf. der Ableitung des Arbeitsparameters im Schritt 104) einerseits und die Bestimmung der Einstellwerte für die Aktoren 36, 38, 42, 84, 48, 50 in den Schritten 104, 106 und 114 andererseits kann in unterschiedlichen Prozessen (oder Prozessoren) der Kontrolleinrichtung 54 erfolgen.

Die Einstellung des Aktors 36 und ggf. eines nicht gezeigten Aktors zur Verstellung der seitlichen Neigung des Erntevorsatzes 18 und/oder ggf. separat zum Ausgleich eines Seitenhanges höhenverstellbarer Vorderräder 14 wird anhand der topographischen Daten der Karte bestimmt, vgl. WO 2008/088916 A1. Aus den topographischen Daten abgeleitete Werte für eine seitliche Neigung des Mähdreschers 10 am Seitenhang und/oder eine Neigung des Mähdreschers 10 in Vorwärtsrichtung können auch Signale zur Einstellung der Aktoren 42 für die Verstellung der Sieböffnung abgeleitet werden.

Die Lenkung des Mähdreschers 10 bei der Ernte erfolgt manuell durch den Bediener des Mähdreschers anhand des in der Karte abgespeicherten Wegs 302 und des Ausgangssignals des Positionsbestimmungssystems 62, sei es selbsttätig mittels eines Lenkaktors (nicht gezeigt) zur Verstellung des Lenkwinkels der Hinterräder 16 oder einer Anzeige auf der Bedienerschnittstelle 68.

Im Schritt 106 werden die jeweiligen Arbeitsparameter bzw. daraus abgeleitete Einstellwerte von der Kontrolleinrichtung 54 an die Aktoren 36, 38, 42, 84, 48, 50 übersandt, sodass diese selbsttätig in die jeweils von der Kontrolleinrichtung 54 festgelegte Position gelangen.

Es folgt der Schritt 108, in dem abgefragt wird, ob ein Neuabgleich der Kontrolleinrichtung 54 erforderlich bzw. sinnvoll ist. Ein derartiger Neuabgleich ist insbesondere dann angebracht, wenn der Mähdrescher 10 seine Arbeit (morgens) neu aufnimmt, wenn ein Feld mit anderem Erntegut als zuvor abgeerntet wird oder wenn seit dem letzten Neuabgleich eine bestimmte Zeit vergangen ist, da sich Ernteguteigenschaften mit fortlaufender Tageszeit insbesondere bei Sonnenbestrahlung ändern. Der Neuabgleich dient dazu, Daten für eine Feineinstellung des Mähdreschers 10 bereitzustellen, um die im Schritt 104 festgelegten Arbeitsparameter noch präziser an die jeweiligen Bedingungen anpassen zu können.

Falls im Schritt 108 festgestellt wird, dass ein Neuabgleich nicht erforderlich ist, folgt der Schritt 114, welcher weiter unten detailliert erläutert wird. Anderenfalls folgt der Schritt 110, in welchem die Kontrolleinheit 54 prüft, ob die im Folgenden befahrene Teilstrecke des Wegs 302 über eine hinreichend lange (über einem Schwellenwert von z.B. 100 m liegende) Entfernung innerhalb vorbestimmter Grenzen konstante Eigenschaft vorzugsweise einschließlich der Topographie aufweist. Dadurch wird gewährleistet, dass während des ggf. nachfolgenden Schrittes 112 hinreichen homogene Bedingungen herrschen, um reproduzierbare Ergebnisse und somit geeignete Daten für die Feineinstellung zu erzielen. Hierbei kann auch die Topographie berücksichtigt werden, denn das Erntegut hat auf Nordhängen sicher andere Eigenschaften als auf Südhängen. Ist die Strecke nicht geeignet, folgt der Schritt 114, anderenfalls der Schritt 112.

Im Schritt 112 werden nun die besagten Daten für die Feineinstellung gewonnen. Dazu wird der Mähdrescher 10 zunächst mit vorbestimmter Geschwindigkeit oder einer zu einem bestimmten Durchsatz (Sensor 46) führenden Geschwindigkeit über das Feld gefahren, vorzugsweise über die ganze im Schritt 110 identifizierte Teilstrecke des Wegs 302 oder einen Teil davon. Nachdem sich der Verarbeitungsprozess im Mähdrescher 10 stabilisiert hat, kann beispielsweise eine Kalibrierung der Kornverlustsensoren 52 und/oder 58 erfolgen, sei es mit einer Verlustprüfschale (vgl. DE 101 50 080 A1) oder durch Auszählen der Körner hinter dem Mähdrescher 10 durch den Bediener oder mittels eines Bildverarbeitungssystems.

Alternativ oder zusätzlich kann der Bediener einen oder mehrere Ergebnisse des Arbeitsprozesses, wie die Reinheit des Korns im Korntank 28 oder die Zusammensetzung der Überkehr, überprüfen und mittels der Bedienerschnittstelle 68 entsprechende Eingaben in die Kontrolleinrichtung 54 geben. Hierzu sei auf die Offenbarung der EP 1 297 733 A1 und der EP 1 371 278 A1 verwiesen. Die Kontrolleinrichtung 54 leitet dann einen neuen Zusammenhang zwischen der aus der Karte bekannten Eigenschaft des Feldes und dem Arbeitsparameter ab, der später im Schritt 114 verwendet wird. Es besteht auch die Möglichkeit, dass der Bediener einfach einen additiven Korrekturwert oder multiplikativen Korrekturfaktor eingibt, wenn er mit einer Vorgabe der Kontrolleinheit für einen Arbeitsparameter nicht zufrieden ist. So kann der Bediener mittels der Bedienerschnittstelle 68 beispielsweise die Vortriebsgeschwindigkeit oder den Einstellwert für einen der anderen Aktoren 36, 38, 42, 48, 50 um einige Prozent oder konkrete absolute Werte hoch- oder heruntersetzen, wenn der Durchsatz oder ein anderes Ergebnis des Arbeitsprozesses nicht seinen Erwartungen entspricht. Schließlich kann der Schritt 112 auch ausschließlich auf von der Kontrolleinrichtung 54 gewonnenen Daten beruhen, indem diese Sensorwerte verwendet, um einen oder mehrere Arbeitsparameter genauer einzustellen. So kann beispielsweise der Bruchkorngehalt im Körnerelevator mittels einer Kamera oder eines UV-Sensors ermittelt und zur Bestimmung eines neuen Zusammenhangs zwischen der aus der Karte bekannten Eigenschaft des Feldes und dem Arbeitsparameter (hier: Dreschwerkdrehzahl und - spalt) herangezogen werden.

Die im Schritt 112 gewonnenen Daten zur Feineinstellung können auch Größen von mathematischen Modellen für die Regelung von Arbeitsparametern betreffen, z.B. eines mathematischen Modells zur Einstellung der Aktoren 38, 42 für die Reinigungseinrichtung 26. Es besteht auch die Möglichkeit, dass die besagten Daten Größen von Maschinenlernalgorithmen sind, z.B. von neuralen Netzwerken und/oder die Auswahl einer Kontrollstrategie betreffen, d.h. beispielsweise zwischen einer Durchsatzregelung und einer verlustbasierten Regelung umschalten.

Im Schritt 118 wird dann abgefragt, ob der Schritt 112 abgeschlossen wurde, d.h. hinreichend viele Daten für die Feineinstellung gewonnen wurden. Dabei besteht die Möglichkeit, den Schritt 112 auf einer weiteren Wegstrecke zu wiederholen, auf der dieselben oder andere Eigenschaften des Feldes gelten. Gelten andere Eigenschaften, besteht die Möglichkeit, für diese Eigenschaften zweite, diesen anderen Eigenschaften zuordenbare Daten für die Feineinstellung zu gewinnen. Daten zur Feineinstellung bei Zwischenwerten der Eigenschaften können dann gleich oder später durch Interpolation erzeugt werden. Ist das Ergebnis des Schritts 118, dass die Findung der Daten für die Feineinstellung noch nicht abgeschlossen ist, folgt wieder der Schritt 110, anderenfalls der Schritt 114.

Im Schritt 114 erfolgt eine Feineinstellung der Arbeitsparameter, die zuvor im Schritt 104 anhand der Karte festgelegt wurden. Dabei werden anfangs (wenn der Neuabgleich der Schritte 108 bis 112 zur Feststellung der Daten für die Feineinstellung noch nicht durchgeführt wurde) einfach die Daten aus dem Schritt 104 verwendet. Nach Beendigung des Neuabgleichs werden hingegen die Daten zur Feineinstellung aus den Schritten 108 bis 112 benutzt, um anhand der Arbeitsparameter aus dem Schritt 104 und der Daten zur Feineinstellung eine verbesserte Festlegung der Arbeitsparameter zu finden und diese bzw. daraus abgeleitete Einstellwerte an die Aktoren 36, 38, 42, 84, 48, 50 zu übersenden. Demnach können im Schritt 114 die Ausgangswerte der Körnerverlustsensoren 52, 58 anhand der gefundenen Kalibrierwerte verbessert und zur selbsttätigen Regelung von Arbeitsparametern des Mähdreschers 10 herangezogen werden. Analog können Werte des Durchsatzsensors 46 kalibriert und somit genauer erfasst werden. Wie oben beschrieben, können auch die im Schritt 112 ermittelten Zusammenhänge zwischen den Eigenschaften des Felds 304 in der Karte und den einzustellenden, optimierten Arbeitsparametern zur Einstellung der Aktoren 36, 38, 42, 84, 48, 50 verwendet werden. Die nun erreichten Einstellungen sind genauer als die nur auf dem Schritt 104 basierenden Einstellungen und führen zu besseren Arbeitsergebnissen.

Im Schritt 116 wird anschließend abgefragt, ob die Karte hinreichend genau ist. Wenn keine größeren Abweichungen zwischen den Arbeitsparametern aus Schritt 104 und den Arbeitsparametern aus Schritt 114 bestehen, ist die Karte hinreichend genau und es folgt wieder der Schritt 104, um für die nächste Position des Mähdreschers 10 entlang des Weges 302 einen oder mehrere Arbeitsparameter zu bestimmen. Dabei wird der Schritt 106 nach Beendigung des Neuabgleichs übersprungen, weil im Schritt 114 direkt die feineingestellten Arbeitsparameter eingestellt werden.

Ergibt der Schritt 116 hingegen, dass die Karte nicht hinreichend korrekt ist, wird die Karte im Schritt 120 korrigiert. So kann beispielsweise ein ungenauer Durchsatzwert in der Karte durch einen mittels des Durchsatzsensors 46 erfassten Durchsatzwert ersetzt werden, oder es wird ein Mittelwert aus einem in der Karte enthaltenen und durch den Durchsatzsensor 46 erfassten Durchsatz eingetragen. Es besteht auch die Möglichkeit, Grenzen zwischen benachbarten Klassen zu verschieben, wenn sie sich anhand von Werten eines Sensors oder des Positionsbestimmungssystems 62 als nicht zutreffend erwiesen haben. Auf den Schritt 120 folgt (mit einer geänderten Karte, Schritt 100) wieder der Schritt 104.

Während der Schritte 104 bis 114 werden dem Bediener auf der Bedienerschnittstelle 68 durch die Kontrolleinheit 54 Informationen über die jeweils von der Kontrolleinheit 54 durchgeführten Schritte angezeigt. Außerdem werden, wenn sinnvoll, dem Bediener Anweisungen über die von ihm durchzuführenden Schritte angezeigt, z.B. wenn er die Anzahl der Verlustkörner auf einer bestimmten Fläche auszählen und über die Bedienerschnittstelle 68 an die Kontrolleinheit 54 eingeben soll. Wenn erforderlich, kann der Mähdrescher 10 selbsttätig anhalten, um dem Bediener zu ermöglichen, erforderliche Aktionen durchzuführen, die dem Bediener auf der Anzeigeeinrichtung der Bedienerschnittstelle 68 angezeigt werden. Zudem kann auf der Anzeigeeinrichtung der Bedienerschnittstelle 68 die Karte angezeigt werden, analog der Darstellung in Figur 3, wobei die jeweilige Position des Mähdreschers 10, der zurückzulegende Weg 302 und die entsprechende Klassifizierung und während des Wegs durchzuführende Aktionen (Kalibrierung etc.) besonders hervorgehoben werden können. Auch von der Kontrolleinheit 54 ausgewählte Einstellungen für die Aktoren 36, 38, 42, 84, 48, 50, aus Signalen der Sensoren 46, 52, 58 abgeleitete Werte und/oder beliebige Arbeitsparameter des Mähdreschers 10 können auf der Anzeigeeinrichtung der Bedienerschnittstelle 68 angezeigt werden.

Es bleibt anzumerken, dass verschiedene Modifikationen des erfindungsgemäßen Verfahrens denkbar sind. So können nach einer Neueinstellung die Schritte 106, 108, 114 und 116 übersprungen werden, wenn eine Änderung der Einstellung nur über eine relativ kurze, unter einem Schwellenwert liegende Entfernung erfolgen würde, wie beispielsweise am unteren, rechten Rand der Karte der Figur 3 bei den Wendeschleifen 306 im Vorgewende. Weiterhin kann in den Schritten 104 und/oder 114 das Ausgangssignal eines vorausschauenden Sensors 60, bei dem es sich um eine Kamera zur Erfassung der Bestandsdichte vor dem Mähdrescher 10 handeln kann, zur Erzeugung genauerer Arbeitsparameter herangezogen werden, um anhand der Karte nicht vorhersehbare, stochastische Größen auszugleichen, wie Wildschäden, Insektenfraß oder Lagergetreide.

## Patentansprüche

1. Verfahren zur Einstellung von Arbeitsparametern einer Erntemaschine (10), mit folgenden Schritten:
(a) Bereitstellen einer Karte mit Eigenschaften eines Feldes (304) in einer elektronischen Kontrolleinrichtung (54) der Erntemaschine (10);
(b) Ableiten von wenigstens einem Arbeitsparameter der Erntemaschine (10) bei einem Erntevorgang durch die Kontrolleinrichtung (54) unter Berücksichtigung einer für eine Ernteposition aus der Karte entnommenen Eigenschaft des Feldes (304);
(c) Einstellen eines Aktors (36, 38, 42, 84, 48, 50) der Erntemaschine (10) anhand des abgeleiteten Arbeitsparameters durch die Kontrolleinrichtung (54);
(d) Ermitteln eines feineingestellten Arbeitsparameters durch die Kontrolleinrichtung (54) anhand des Ergebnisses des Schrittes (b) unter Berücksichtigung eines mit einem Sensor (46, 52, 58) erfassten Messwertes eines durch den Aktor (36, 38, 42, 84, 48, 50) beeinflussbaren Ergebnisses des Erntevorgangs und/oder eines anhand einer Bedienereingabe ermittelten Zusammenhangs zwischen einem im Schritt (b) ermittelten Arbeitsparameter und einem einzustellenden Arbeitsparameter und Wiederholen des Schritts (c) mit dem feineingestellten Arbeitsparameter;
**dadurch gekennzeichnet, dass** (e) durch die Kontrolleinrichtung (54) anhand der Karte Strecken entlang eines Weges (302) der Erntemaschine (10) über das Feld (304) identifiziert werden, an denen Eigenschaften des Feldes (304) innerhalb vorbestimmter Grenzen und über einen Schwellenwert für die Länge liegende Distanzen homogen sind, und
dass (f) Kalibrierdaten für den Sensor (46, 52, 58) und/oder Parameter für die Feineinstellung des Arbeitsparameters und/oder die Bedienereingabe für den Schritt (d) beim Befahren und Abernten zumindest einiger der im Schritt (e) identifizierten Strecken ermittelt und bei nachfolgenden Schritten (d) verwendet werden.

2. Verfahren nach Anspruch 1, wobei im Schritt (f) die Kalibrierdaten und/oder Parameter für die Feineinstellung des Arbeitsparameters für den Schritt (d) durch einen Bediener ermittelt und in die Kontrolleinrichtung (54) eingegeben oder durch die Kontrolleinrichtung (54) ermittelt werden.

3. Verfahren nach Anspruch 1 oder 2, wobei der Arbeitsparameter die Vortriebsgeschwindigkeit der Erntemaschine (10) und/oder eine Dreschwerkeinstellung und/oder eine Reinigungseinstellung und/oder eine Schneidwerkeinstellung ist.

4. Verfahren nach einem der vorhergehenden Ansprüche, wobei der Sensor ein Kornverlustsensor (52, 58) und/oder ein Durchsatzsensor (46) ist.

5. Verfahren nach einem der vorhergehenden Ansprüche, wobei die in der Karte abgespeicherten Eigenschaften des Feldes (304) Informationen hinsichtlich der Bodeneigenschaften und/oder der Topographie des Feldes und/oder der Bestandsdichte enthalten.

6. Verfahren nach einem der vorhergehenden Ansprüche, wobei der Messwert aus dem Schritt (d) zur Aktualisierung der in der Karte verzeichneten Eigenschaften und/oder der zugehörigen Position verwendet wird.

7. Verfahren nach einem der vorhergehenden Ansprüche, wobei die im Schritt (f) ermittelten Parameter Größen von mathematischen Modellen oder von Maschinenlernalgorithmen sind und/oder die Auswahl einer Kontrollstrategie betreffen.

8. Verfahren nach einem der vorhergehenden Ansprüche, wobei die Kontrolleinrichtung (54) im Schritt (d) zusätzlich den Messwert eines vorausschauenden Erntegutsensors (60) berücksichtigt.

9. Verfahren nach einem der vorhergehenden Ansprüche, wobei die Kontrolleinrichtung (54) im Schritt (b) Änderungen der Eigenschaften des Feldes in der Karte ignoriert, wenn diese nur für einen Mindestwert unterschreitende Distanzen gelten.

10. Erntemaschine (10) mit einer Kontrolleinrichtung (54), einem mit der Kontrolleinrichtung (54) verbundenen Aktor (36, 38, 42, 84, 48, 50), durch den ein Ergebnis des Erntevorgangs beeinflussbar ist und mit einem Sensor (46, 52, 58) zur Erfassung eines Messwerts eines durch den Aktor (36, 38, 42, 84, 48, 50) beeinflussbaren Ergebnisses des Erntevorgangs, wobei die Kontrolleinrichtung (54) zur Durchführung eines Verfahrens nach einem der Ansprüche 1 bis 9 ausgebildet ist.

## Claims

1. Method for setting operating parameters for a harvester (10), having the following steps:
(a) provision of a map having properties of a field (304) in an electronic control device (54) of the harvester (10);
(b) derivation of at least one operating parameter for the harvester (10) during a harvesting operation by the control device (54) by taking account of a property of the field (304) that is taken from the map for a harvesting position;
(c) setting of an actuator (36, 38, 42, 84, 48, 50) of the harvester (10) on the basis of the derived operating parameter by the control device (54);
(d) ascertainment of a finely adjusted operating parameter by the control device (54) on the basis of the result of step (b) by taking account of a measured value, captured using a sensor (46, 52, 58), for a result of the harvesting operation, which result can be influenced by the actuator (36, 38, 42, 84, 48, 50), and/or for a correlation between an operating parameter ascertained in step (b) and an operating parameter that is to be set, which correlation is ascertained on the basis of a user input, and repetition of step (c) with the finely adjusted operating parameter;
**characterized in that** (e) the control device (54) uses the map to identify sections along a path (302) of the harvester (10) across the field (304) at which properties of the field (304) are homogeneous within predetermined limits, and distances above a threshold value for the length, and
**in that** (f) calibration data for the sensor (46, 52, 58) and/or parameters for the fine adjustment of the operating parameter and/or the user input for step (d) are ascertained on passing over and reaping at least some of the sections identified in step (e) and are used in subsequent steps (d).

2. Method according to Claim 1, wherein in step (f) the calibration data and/or parameters for the fine adjustment of the operating parameter for step (d) are ascertained and input into the control device (54) by a user or are ascertained by the control device (54).

3. Method according to Claim 1 or 2, wherein the operating parameter is the rate of advance of the harvester (10) and/or a thresher tool setting and/or a cleaning setting and/or a cutting tool setting.

4. Method according to one of the preceding claims, wherein the sensor is a grain loss sensor (52, 58) and/or a throughput sensor (46).

5. Method according to one of the preceding claims, wherein the properties of the field (304) that are stored in the map contain information concerning the ground properties and/or the topography of the field and/or the stock density.

6. Method according to one of the preceding claims, wherein the measured value from step (d) is used to update the properties recorded in the map and/or the associated position.

7. Method according to one of the preceding claims, wherein the parameters ascertained in step (f) are variables from mathematical models or from machine learning algorithms and/or relate to the selection of a control strategy.

8. Method according to one of the preceding claims, wherein the control device (54) additionally takes account of the measured value from a predictive harvest sensor (60) in step (d).

9. Method according to one of the preceding claims, wherein the control device (54) ignores changes in the properties of the field in the map in step (b) if said changes apply only to distances below a minimum value.

10. Harvester (10) having a control device (54), an actuator (36, 38, 42, 84, 48, 50) that is connected to the control device (54) and that can influence a result of the harvesting operation and having a sensor (46, 52, 58) for capturing a measured value for a result of the harvesting operation, which result can be influenced by the actuator (36, 38, 42, 84, 48, 50), wherein the control device (54) is designed to carry out a method according to one of Claims 1 to 9.

## Revendications

1. Procédé de réglage de paramètres de fonctionnement d'une moissonneuse (10), comprenant les étapes suivantes :
(a) mise à disposition d'une carte contenant les caractéristiques d'un champ (304) dans un dispositif de commande électronique (54) de la moissonneuse (10) ;
(b) dérivation d'au moins un paramètre de fonctionnement de la moissonneuse (10) lors d'une opération de moissonnage par le dispositif de commande (54) en tenant compte d'une caractéristique du champ (304) tirée de la carte pour une position de moissonnage ;
(c) réglage d'un actionneur (36, 38, 42, 84, 48, 50) de la moissonneuse (10) à l'aide du paramètre de fonctionnement dérivé par le dispositif de commande (54) ;
(d) détermination d'un paramètre de fonctionnement réglé avec précision par le dispositif de commande (54) à l'aide du résultat de l'étape (b) en tenant compte d'une valeur mesurée captée avec un capteur (46, 52, 58) d'un résultat de l'opération de moissonnage pouvant être influencé par l'actionneur (36, 38, 42, 84, 48, 50) et/ou d'une relation, déterminée à l'aide d'une saisie de l'opérateur, entre un paramètre de fonctionnement déterminé à l'étape (b) et un paramètre de fonctionnement à régler et répétition de l'étape (c) avec le paramètre de fonctionnement réglé avec précision ;
**caractérisé en ce que** (e) des segments sont identifiés par le dispositif de commande (54) à l'aide de la carte le long d'un trajet (302) de la moissonneuse (10) sur le champ (304), au niveau desquels les caractéristiques du champ (304) sont homogènes à l'intérieur de limites prédéfinies et au-dessus d'une valeur seuil pour la longueur des distances horizontales, et
**en ce que** (f) des données de calibrage pour le capteur (46, 52, 58) et/ou des paramètres pour le réglage de précision du paramètre de fonctionnement et/ou la saisie de l'opérateur pour l'étape (d) sont déterminés lors du déplacement sur et de la récolte d'au moins une partie des segments identifiés à l'étape (e) et utilisés lors des étapes (d) suivantes.

2. Procédé selon la revendication 1, selon lequel, à l'étape (f), les données de calibrage et/ou les paramètres pour le réglage de précision du paramètre de fonctionnement pour l'étape (d) sont déterminés par un opérateur et saisis dans le dispositif de commande (54) ou déterminés par le dispositif de commande (54).

3. Procédé selon la revendication 1 ou 2, selon lequel le paramètre de fonctionnement est la vitesse d'avance de la moissonneuse (10) et/ou un réglage du mécanisme de battage et/ou un réglage de nettoyage et/ou un réglage du mécanisme de coupe.

4. Procédé selon l'une des revendications précédentes, selon lequel le capteur est un capteur de pertes de grain (52, 58) et/ou un capteur de débit (46).

5. Procédé selon l'une des revendications précédentes, selon lequel les caractéristiques du champ (304) qui sont enregistrées dans la carte contiennent des informations concernant les propriétés du sol et/ou la topographie du champ et/ou la densité de plantation.

6. Procédé selon l'une des revendications précédentes, selon lequel la valeur mesurée de l'étape (d) est utilisée pour l'actualisation des caractéristiques enregistrées dans la carte et/ou de la position associée.

7. Procédé selon l'une des revendications précédentes, selon lequel les paramètres déterminés à l'étape (f) sont des grandeurs de modèles mathématiques ou d'algorithmes d'apprentissage de la machine et/ou concernent la sélection d'une stratégie de commande.

8. Procédé selon l'une des revendications précédentes, selon lequel le dispositif de commande (54) tient en plus compte à l'étape (d) de la valeur mesurée d'un capteur de produit moissonné prévisionnel (60).

9. Procédé selon l'une des revendications précédentes, selon lequel le dispositif de commande (54) à l'étape (b) ignore les modifications des caractéristiques du champ dans la carte lorsque celles-ci ne s'appliquent que pour des distances inférieures à une valeur minimale.

10. Moissonneuse (10) équipée d'un dispositif de commande (54), d'un actionneur (36, 38, 42, 84, 48, 50) relié au dispositif de commande (54), par le biais duquel un résultat de l'opération de moissonnage peut être influencé, et d'un capteur (46, 52, 58) destiné à capter une valeur mesurée d'un résultat de l'opération de moissonnage pouvant être influencé par l'actionneur (36, 38, 42, 84, 48, 50), le dispositif de commande (54) étant configuré pour mettre en oeuvre un procédé selon l'une des revendications 1 à 9.
